# EUROPEAN PATENT SPECIFICATION

(11) **EP 0 709 028 B1**
(45) Date of publication and mention of the grant of the patent: **02.02.2000**
(21) Application number: 95307698.1
(22) Date of filing: 27.10.1995
(51) Int. Cl.: A21C 3/04, A21C 11/16

(54) **Apparatus for extruding food material**
Vorrichtung zum Auspressen von Nahrungsmittel
Appareil pour l'extrusion d'un aliment

(30) Priority: 27.10.1994 JP 26337194
(43) Date of publication of application: 01.05.1996
(73) Proprietor: RHEON AUTOMATIC MACHINERY CO., LTD., Utsunomiya-shi Tochigi-ken (JP)
(72) Inventor: Morikawa, Michio, Utsunomiya-chi, Tochigi-ken (JP)
(74) Representative: Leale, Robin George

(56) References cited:
- EP-A- 0 004 156
- EP-A- 0 580 430
- WO-A-91/15956
- US-A- 2 159 726

## Description

The present invention relates to an apparatus for intermittently extruding a predetermined quantity of a material of a highly viscoelastic fluid nature such as is used in producing foods, etc.

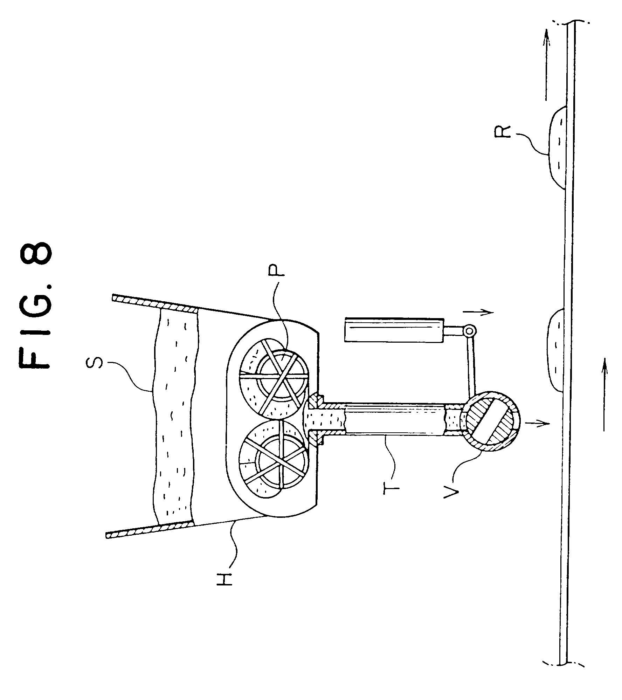

A prior art technique relevant to the present invention is shown in Fig. 8. An apparatus for intermittently supplying food material S comprises a supply pump P and an extrusion valve V, the supply pump P being adapted to supply the food material S contained in a hopper H.

When the food material S is supplied by this apparatus, the material is supplied to a supply pipe T while the extrusion valve V is closed and the supply pump P is stopped when the supply pipe T is filled with the material. When the extrusion valve V opens, the pump P simultaneously begins to rotate to supply under a predetermined pressure the food material S into the supply pipe T. Thus, a predetermined amount of the food material S is intermittently discharged through the exit of the extrusion valve V. After a predetermined time the supply pump P stops rotating, and simultaneously the extrusion valve V closes, whereby a predetermined quantity of the material is discharged.

However, if the intervals of opening and closing of the extrusion valve V are not uniform, the food material S supplied to the supply pipe T will be pulled back into the hopper H through the supply pump P, by its own elasticity. This brings about a density change in the food material S, and also makes the pressure of the food material S in the supply pipe T unstable. Therefore, this poses a problem in that subsequent food material S cannot be extruded in predetermined amounts.

In such prior art techniques for intermittently supplying a predetermined quantity of highly viscoelastic food material, for instance topping material consisting of a highly viscoelastic biscuit used for producing cake bread like melon bread etc, topping material mixed with chocolate chips or raisins, or such other highly viscoelastic food materials as chocolates, jams, custards, etc, kneaded sea urchins and kneaded cheese, the food material was extruded from the exit at unequal intervals and tended to be pulled back when the pump was stopped. The pressure in the food material decreased as it was extruded from the extrusion valve and so did the pressure at the downstream end of the supply pump. The present invention provides an apparatus for intermittently supplying a predetermined quantity of food material that, by adjusting the extrusion pressure in the extrusion valve, keeps the pressure of the food material always constant, so that a predetermined quantity of food material can be stably extruded.

According to the present invention there is provided apparatus for intermittently extruding a predetermined quantity of food material onto a conveying means, comprising: a hopper for food material having a supply pump at its exit, a supply pipe having one end connected to the said pump and the other end to an extrusion valve, and an accumulator mounted on or upstream of the extrusion valve so as to be able to receive food material destined for the extrusion valve, the said accumulator being arranged to apply a substantially constant pressure to the food material during operation of the apparatus, so that the accumulator expands to receive food material if the pressure in the food material rises above a predetermined level, and contracts to expel food material if the pressure in the food material falls below said level, whereby to keep the pressure in the food material in the extrusion valve substantially constant.

EP-A-0004156 discloses apparatus for feeding food material to an extruder, comprising a reservoir for said food material, and a flow path between the said reservoir and the extruder, the said flow path having a variable volume portion arranged to be filled with food material being fed along said flow path from the reservoir, and means for pressuring said variable volume portion while the said reservoir is being replenished, so as to supply the extruder with food material from the variable volume portion at that time.

In this apparatus the said variable volume portion is arranged to be pressurised only when the reservoir is being replenished, there being no provision for said portion to act as an accumulator by applying a substantially constant pressure to food material therein during operation of the apparatus.

Preferably the apparatus further includes a position sensing means for sensing the position of articles thereon.

Some embodiments of the invention will now be described by way of example and with reference to the accompanying drawings, in which:-
Fig. 1 is a partly cut away front view showing the structure and function of a first embodiment of the present invention;
Fig. 2 is a bottom view of the extrusion valve of Fig. 1, partly cut away;
Fig. 3 is a cross-sectional view, partly cut away, taken along line A-A of Fig. 1;
Fig. 4 is a cross-sectional view taken along line B-B of Fig. 3;
Fig. 5 is a partly cut away explanatory view of the extrusion valve of the first embodiment showing its structure and function;
Fig. 6 is a partial cross-sectional front view showing the structure and function of a second embodiment of the invention;
Fig. 7 is a partial cross-sectional front view showing the structure and function of a third embodiment of the invention; and
Fig. 8 is a partial cross-sectional front view of a prior art apparatus.

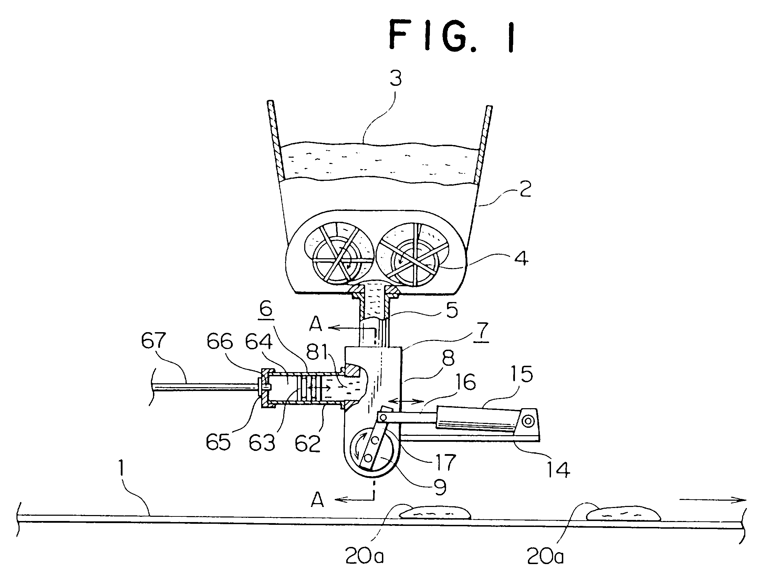

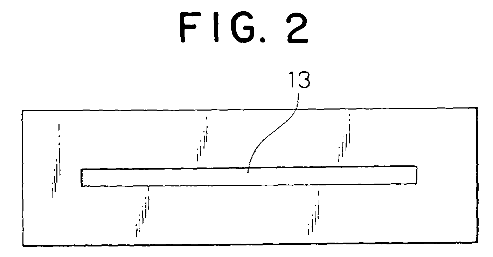

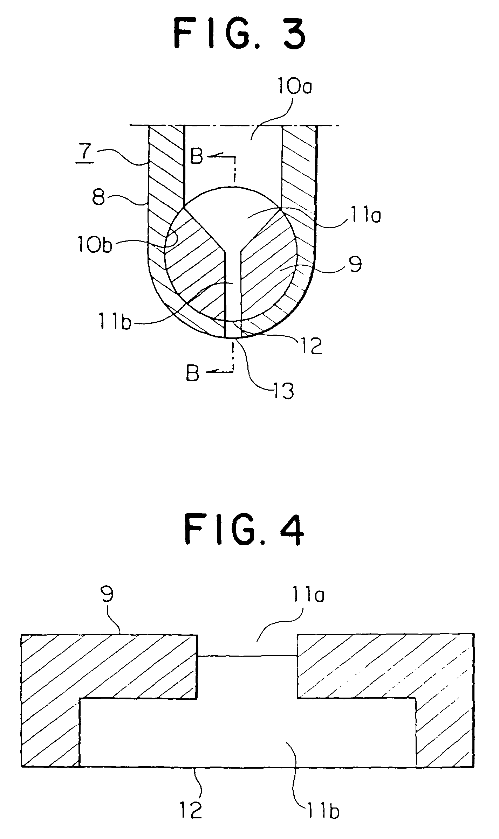

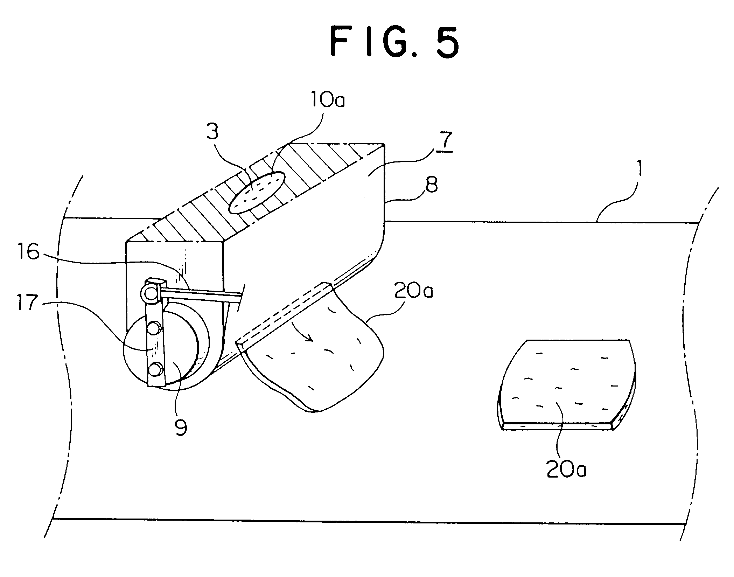

Referring to Figs. 1 to 5, a first embodiment of apparatus for intermittently extruding a predetermined quantity of food material will be described. Conveying means 1 can be a conveyor that moves at a fixed speed or intermittently. A supply pump 4, which can be a volume-type pump, is provided in a hopper 2. The supply pump 4 supplies the food material 3. To the exit of the pump 4 is connected the upper end of a supply pipe 5.

The food material 3 can be for example viscoelastic biscuit dough, or the same mixed with chocolate chips or raisins.

An accumulator 6 that pushes the food material 3, in the supply pipe 5 or in the housing 8 of an extrusion valve 7, at a preset pressure is mounted on the housing inlet 10a or near the exit of the lower end of the supply pipe 5.

One end of a tubular cylinder 62 of the accumulator 6 is connected to the housing 8 or to the supply pipe 5, so that the food material 3 can freely move into or out of the cylinder 62. In the cylinder 62 a reciprocally movable piston 63 is located. The piston 63 is supported by and can slide on the inner surface of the cylinder 62. The piston 63 and the cylinder 62 form a seal to prevent the food material 3 from proceeding beyond the piston 63. One surface of the piston 63 serves as a contact surface to contact the food material 3.

The piston 63 has a substantial thickness in the axial direction and has at least one annular groove around its periphery to improve fluid-tightness.

The inner diameter of the cylinder 62 is dimensioned so that the food material 3 can freely and smoothly move into or out of the part of the cylinder 62 defined by the contact surface of the piston 63. Also, the inner diameter of the cylinder 62 is sized larger than the diameter of the mouth 81 through which the food material passes between the housing 8 and the cylinder 62. By this arrangement the piston 63 is prevented from projecting from the cylinder 62 into the housing 8 or into the supply pipe 5.

To indicate the position of the piston 63, the cylinder 62 is made of a transparent plastic material or is formed with a longitudinal aperture covered with a transparent plastic material. Before the food material 3 is extruded, it is supplied to the cylinder 62 to the extent that the piston 63 is pushed back and caused to be located in the middle of the cylinder 62.

A cap 65 is provided on the end of the cylinder 62 opposite to the end where the cylinder is connected to the housing 8.

The cap 65 is formed with an air inlet 66, to which a hose 67 that supplies constant pressure air is removably and air-tightly connected. The supplied pressurized air is fed into the pressure chamber 64 that is defined by the part of the inner wall of the cylinder 62 behind the piston 63, the cap 65, and the rear wall of the piston 63, so that the pressurized air may push the piston 63. The constant-pressure air is supplied to the pressure chamber 64 through the hose 67 from a compressor (not shown) and a pressure adjusting decompressor (not shown), where the constant-pressure air is decompressed to a preset pressure.

A pressure drop in the food material 3 in the housing 8, or near the exit of the pipe 5, can arise firstly, from a change in the amount of the food material 3 in the supply pipe 5 when the material is extruded from the extrusion valve 7, and secondly, when the extrusion valve 7 is closed and the supply pump 4 is stopped, from the strongly viscoelastic characteristics of the food material 3 causing it to be pulled back into the hopper 2 through the supply pump 4.

To prevent such a pressure drop in the food material 3 in the housing 8, the piston 63 of the accumulator 6 pushes the food material 3 to apply a preset pressure to the material. Conversely, if the pressure of food material 3 becomes higher than the preset value as the supply pump 4 is rotated, the piston 63 is retracted to keep the pressure of the food material constant. Thus the pressure in the food material can be kept constant by the cooperative action of the supply pump 4 and the accumulator 6.

Changes in density of the food material can also be prevented by the cooperative action of the supply pump 4 and the accumulator 6.

The housing 8 for the extrusion valve 7 has a housing inlet portion 10a, a rotor mounting portion 10b, and a long extrusion aperture 13. The upper end of the inlet portion 10a is connected to the lower end of the supply pipe 5. A rotor 9 is mounted in the rotor mounting portion 10b of the housing 8 so that the rotor can rotate reciprocally. The rotor 9 is formed with an inlet lla, an elongate channel 11b, and an elongate extrusion aperture 12. When the rotor 9 reciprocates in the rotor mounting portion 10b of the housing 8, the extrusion aperture 12 located at the end of the channel llb and the extrusion aperture 13 of the housing are intermittently brought into alignment with each other. The aperture 13 and the aperture 12 have the same lateral dimensions, and the inner diameter of the housing inlet 10a which receives the food material 3 from the supply pipe 5 is generally the same as that of the supply pipe.

An air cylinder 15 is pivotally supported on a bracket 14 fixed to the housing 8, and has its rod 16 pivotally connected to one end of an arm 17 connected to the rotor 9. Therefore, when the rod 16 of the air cylinder 15 reciprocates, the rotor 9 of the extrusion valve 7 is rotated. Intermittently extruded dough pieces 20a are thereby deposited onto the conveying means 1 from the extrusion aperture 13 of the extrusion valve 7.

By adjusting the reciprocating movement of the rod 16, the amount of rotation of the rotor 9 can be changed. Thereby, the amount of overlap of the aperture 12 and the aperture 13 can be adjusted, the thickness of the food material 3 when it is extruded from the extrusion valve 7 can thus be changed.

The above described embodiment functions as follows.

The food material 3 in the hopper 2 is supplied by the supply pump 4 through the supply pipe 5 to the housing inlet portion 10a of the supply valve 7. The food material 3 fills up to the elongate aperture 12 by way of the rotor inlet lla and the groove 11b in the rotor 9.

If the pressure of the food material in the housing 8 becomes lower than the preset value when the supply pump 4 stops rotating, the food material 3 in the cylinder 62 is pushed into the housing 8 by the pushing function of the accumulator 6, so that the pressure drop can be compensated for.

By rotating the supply pump 4 for a predetermined time before the extrusion valve 7 opens, the pressure in the food material 3 becomes high, because the food material 3 in the hopper 2 is supplied to the supply pipe 5. The food material 3 then pushes the piston 63 that is subjected to the preset pressure, and flows into the cylinder 62. When the pressure of the food material 3 returns to the preset value, the piston 63 stops and becomes subjected to the preset pressure, and then the food material 3 is extruded.

Further, since the supply pump 4 continues to rotate when extrusion takes place and the food material 3 is pushed by the piston 63, the food material 3 is supplied to the housing 8 from the supply pump 4 and the accumulator 6, whereby the pressure in the housing 8 can always be kept approximately constant, enabling a predetermined amount of food material 20a to be extruded.

Since at least one annular groove is formed on the surface of the piston 63 sliding in the cylinder 62, even if the food material enters the interface between the piston and the cylinder, such food material 3 will be caught by the annular groove. Thus, even if the food material so enters the interface, it does not proceed beyond the annular groove. Also, since the area of contact between the piston 63 and the cylinder 62 can be made small, frictional heat and wear can be prevented, so that a smooth reciprocal movement of the piston 63 can be realized.

By supplying the food material 3 to the cylinder 62 to the extent that the piston 63 is caused to be located approximately in the middle of the cylinder 62 before the material 3 is extruded, the piston 63 can quickly meet the pressure change when the material 3 is initially extruded.

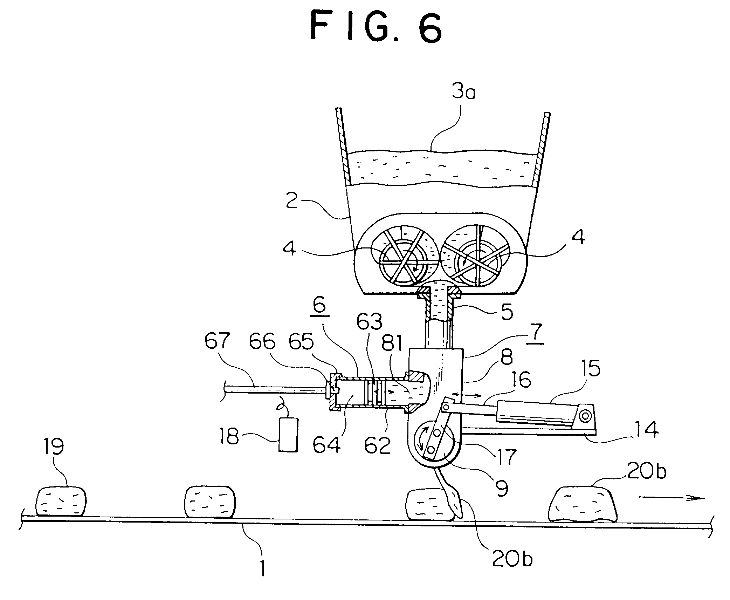

Fig. 6 shows a second embodiment of the present invention, wherein a position sensor 18, for example comprising a photoelectric sensor, is located upstream of the extrusion valve 7 in the direction of movement of the conveyor 1 and above it. The conveyor 1 advances at a preset speed in the direction of the arrow. An extrusion valve 7, for extruding topping food material 3a, is located downstream of the position sensor 18 and above the dough bodies 19 carried on the conveyor.

The topping material 3a may for example consist of biscuit dough pieces, or biscuit dough pieces mixed with chocolate chips or raisins, or jams, or kneaded sea urchins, etc.

The dough bodies 19 may for example comprise highly viscoelastic fermentable bread dough, cakes of pounded fish, meat or boiled fish paste, all divided into pieces of a certain amount. The bodies are intermittently deposited on the conveying means 1 and are conveyed successively by it with a certain distance between them.

The structure of the extrusion valve 7 in Fig. 6 is the same as in the first embodiment.

The rod 16 of the air cylinder 15 controls via the arm 17 the reciprocal rotation of the rotor 9, based on the sensing signal from the position sensor 18.

Reference 20b designates the topping material extruded onto the dough bodies 19, being conveyed.

The conveying conditions of the bodies 19 conveyed by the conveying means 1, at equal or unequal intervals, are sensed by the position sensor 18. Based on the information signal, a timer (not shown) calculates the timing of the opening and closing of the extrusion valve 7. Thus, each body 19 can synchronously receive extruded topping material 20b regardless of whether or not the bodies 19 are conveyed at equal or unequal intervals.

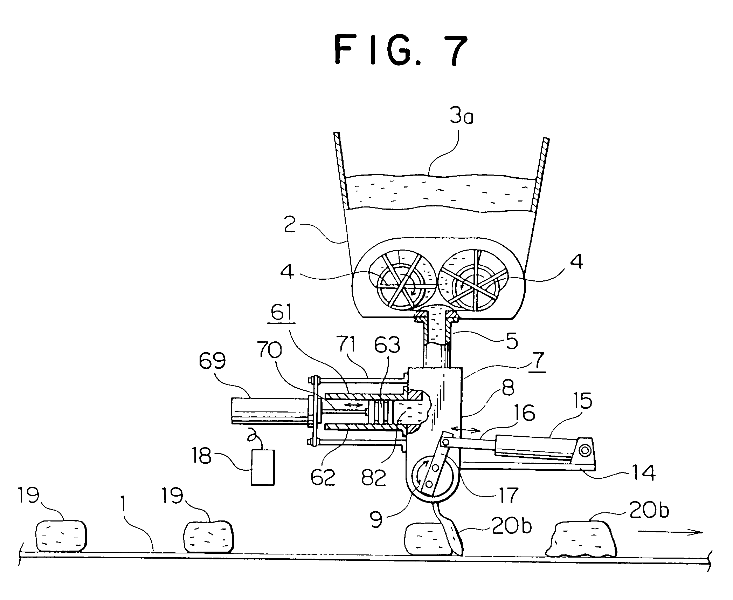

Fig. 7 is a partially cross-sectional front view of a third embodiment of the present invention. In this drawing the same reference numbers are used as in Fig. 6 and the relevant explanations are omitted.

Similarly to the accumulator 6 of the second embodiment, the accumulator 61 of this embodiment is also fixed to the inlet 10a of the housing 8 or located near the exit at the lower end of the supply pipe 5.

An air cylinder 69 is provided at the end of the cylinder 62 opposite to the housing 8. The air cylinder is supported by a bracket 71 fixed to the housing 8. A reciprocally movable rod 70 of the air cylinder 69 is connected to the piston 63.

Pressurized air supplied from a compressor (not shown) flows through a pressure adjustable decompressor (not shown), where the air is decompressed to a preset pressure. The pressurized air so decompressed is supplied to the air cylinder 69. Thus, a preset pressure is applied to the piston 63 connected to the rod 70 to maintain the piston 63 subjected to this preset pressure.

Thus, at least in preferred forms of with the present invention, by mounting the accumulator on the housing so as always to apply a predetermined pressure to the food material or topping material in the extrusion valve, a pressure increase or drop can be compensated for.

## Claims

1. Apparatus for intermittently extruding a predetermined quantity of food material (3) onto a conveying means (1), comprising: a hopper (2) for food material having a supply pump (4) at its exit, a supply pipe (5) having one end connected to the said pump and the other end to an extrusion valve (7), and an accumulator (6) mounted on or upstream of the extrusion valve so as to be able to receive food material destined for the extrusion valve, the said accumulator being arranged to apply a substantially constant pressure to the food material during operation of the apparatus, so that the accumulator expands to receive food material if the pressure in the food material rises above a predetermined level, and contracts to expel food material if the pressure in the food material falls below said level, whereby to keep the pressure in the food material in the extrusion valve substantially constant.

2. Apparatus as claimed in claim 1, further including a position sensing means (18) located above the conveying means (1), for sensing the position of articles on the conveying means.

## Patentansprüche

1. Vorrichtung zum intermittierenden Extrudieren einer vorbestimmten Menge von Nahrungsmittelmaterial (3) auf eine Fördereinrichtung (1), aufweisend: einen Trichter (2) für Nahrungsmittelmaterial mit einer Zuführpumpe (4) an dessen Ausgang, ein Zuführrohr (5), dessen eines Ende mit der Pumpe und dessen anderes Ende mit einem Extrusionsventil (7) verbunden ist, und einen Speicher (6), der auf dem oder stromaufwärts des Extrusionsventil(s) angebracht ist, um für das Extrusionsventil bestimmtes Nahrungsmittelmaterial aufnehmen zu können, wobei der Speicher derart angeordnet ist, daß er während des Betriebs der Vorrichtung einen im wesentlichen konstanten Druck auf das Nahrungsmittelmaterial ausübt, so daß sich der Speicher vergrößert, um Nahrungsmittelmaterial aufzunehmen, wenn der Druck in dem Nahrungsmittelmaterial über ein vorbestimmtes Niveau steigt, und sich verkleinert, um das Nahrungsmittelmaterial auszustoßen, wenn der Druck in dem Nahrungsmittelmaterial unter dieses Niveau sinkt, wodurch der Druck in dem Nahrungsmittelmaterial in dem Extrusionsventil im wesentlichen konstant gehalten wird.

2. Vorrichtung nach Anspruch 1, des weiteren einschließend eine sich über der Fördereinrichtung (1) befindliche Orts- oder Wegmeßeinrichtung (18) zum Messen des Weges von Artikeln auf der Fördereinrichtung.

## Revendications

1. Appareil pour l'extrusion par intermittence d'une quantité prédéterminée d'une matière alimentaire (3) sur un moyen de transport (1), comportant : une trémie (2) pour matière alimentaire ayant une pompe (4) d'alimentation à sa sortie, un conduit (5) d'alimentation ayant une extrémité raccordée à ladite pompe et l'autre extrémité à une vanne d'extrusion (7), et un accumulateur (6) monté sur la vanne d'extrusion ou en amont de celle-ci afin de pouvoir recevoir de la matière alimentaire destinée à la vanne d'extrusion, ledit accumulateur étant agencé de façon à appliquer une pression sensiblement constante à la matière alimentaire pendant le fonctionnement de l'appareil, afin que l'accumulateur s'expanse pour recevoir de la matière alimentaire si la pression de la matière alimentaire s'élève au-dessus d'un niveau prédéterminé, et se contracte pour expulser de la matière alimentaire si la pression de la matière alimentaire descend au-dessous dudit niveau, de façon à maintenir sensiblement constante la pression dans la matière alimentaire à l'intérieur de la vanne d'extrusion.

2. Appareil selon la revendication 1, comprenant en outre un moyen (18) de détection de position placé au-dessus du moyen de transport (1) pour détecter la position d'articles sur le moyen de transport.
